# EUROPEAN PATENT SPECIFICATION

(11) **EP 1 350 398 B1**
(45) Date of publication and mention of the grant of the patent: **04.04.2007**
(21) Application number: 01270069.6
(22) Date of filing: 10.12.2001
(51) Int. Cl.: H04Q 7/36

(54) **SYSTEM AND METHOD FOR FREQUENCY RE-USE IN A SECTORIZED CELL PATTERN IN A WIRELESS COMMUNICATION SYSTEM**
SYSTEM UND VERFAHREN ZUR FREQUENZWIEDERVERWENDUNG IN EINEM SEKTORISIERTEN ZELLENMUSTER IN EINEM DRAHTLOSEN KOMMUNIKATIONSSYSTEM
SYSTEME ET PROCEDE DE REUTILISATION DE FREQUENCE DANS UN MOTIF DE CELLULES SECTORISEES DE SYSTEME DE COMMUNICATION SANS FIL

(30) Priority: 08.12.2000 US 251864 P
(43) Date of publication of application: 08.10.2003
(73) Proprietor: BWA Technology, Inc., Las Vegas, NV 89109-0961 (US)
(72) Inventor: GARRISON, Jack, G., New Minister, B.C., V3M 6H1 (CA)
(74) Representative: Liesegang, Eva
(86) International application number: PCT/US2001/047153
(87) International publication number: WO 2002/047411

(56) References cited:
- EP-A- 0 201 254
- EP-A- 0 847 209
- WO-A-97/22218
- WO-A-98/33338
- US-B1- 6 205 337
- US-B1- 6 216 244
- US-B1- 6 275 704
- US-B1- 6 304 762

## Description

### RELATED APPLICATIONS

The present application is related to co-pending, commonly assigned U.S. patent 6,778,516, entitled "SYSTEM AND METHOD FOR BROADBAND MILLIMETER WAVE DATA COMMUNICATION," co-pending, commonly assigned U.S. patent application serial number 09/604,437, entitled "MAXIMIZING EFFICIENCY IN A MULTI-CARRIER TIME DIVISION DUPLEX SYSTEM EMPLOYING DYNAMIC ASYMMETRY," and co-pending, commonly assigned U.S. patent 6,577,869, entitled "FREQUENCY REUSE FOR TDD." The present application is also being Bled simultaneously with a commonly assigned U.S. patent application 2004/0053 620 A1, entitled "SYSTEM AND METHOD FOR INBAND SIGNALING FOR SECTOR SYNCHRONIZATION IN A WIRELESS COMMUNICATION SYSTEM".

### BACKGROUND OF THE INVENTION

The present invention relates to communication systems and methods and more particularly to a system and method for optimizing the bandwidth of a point to multipoint wireless system by synchronizing transmit and receive modes.

WO 98/33338 discloses a point to multipoint radio access system which combines the use of only two frequency bands and alternating polarizations. Base station antennae feeding adjacent sectors from a common base station site operate at least with different ones of two sets of channels. Moreover, sectors at adjacent base stations sites (e.g., in adjacent cells) which are aligned with the sectors of the first base station site employ either a different set of channels or differing polarization. The two sets of channels can be two sets of frequencies (e.g., FDMA).

Wireless radio links have increasingly become important to provide data communication links for a variety of applications. For example, Internet Service Providers have begun to utilize wireless radio links within urban settings to avoid the installation expense of traditional wired connections or optical fiber. It may be advantageous to utilize wireless radio link systems to provide service to a plurality of users in a point to multipoint architecture. Point to multipoint systems typically consist of a plurality of hub units servicing a plurality of sub units (sometimes referred to as remote units, nodes, or subscriber units). The subs are typically associated with individual nodes on the system. For example, an individual sub unit may be connected to LAN to allow PC's on the LAN to bridge to other networks via the point to multipoint system. Each sub unit communicates via a wireless channel with a particular hub unit. In a point to multipoint system, the hub unit may control communication between a portion of the plurality of sub units associated with a particular coverage area. The hub units schedule transmit and receive bursts to and from sub units. The hub units may distribute data packets received from a particular sub unit to another sub unit within the same coverage area via such frames, to a traditional wired network backbone, or to another hub unit

A point to multipoint system, such as disclosed in the above referenced and commonly assigned patent application entitled "FREQUENCY REUSE FOR TDD," contains a plurality of adjacently located hub units providing an aggregate coverage area. Additionally, these hubs may have their individual coverage areas divided into particular sectors - such as 30 or 90 degree sectors. Additionally, the hubs may utilize frequency division or other techniques to provide a plurality of communication channels.

Channel reuse techniques have developed to allow reuse of channels within a network without introducing unacceptable levels of interference. The purpose of these channel reuse techniques is maximize channel availability while avoiding co-channel interference between neighboring hubs. Clearly, these channel reuse techniques are valuable tools to increasing the bandwidth of point to multipoint systems. However, according to the present invention it has been realized that point to multipoint systems contain architectural characteristics that may be exploited to allow optimization of channel availability greater than that available with traditional channel reuse techniques while avoiding co-channel interference.

For example, data traffic over a point to multipoint system may be bursty, rather than at a fixed or continuous data rate. Specifically, an Internet browser application executed on a sub unit would typically require significant down link bandwidth while downloading HTML code from a website, but would require little or no bandwidth while a user reads the display associated with the HTML code. Additionally, the bandwidth requirements of many applications such as browsers may be asymmetric. Specifically, Internet browsers often download a large amount of data, but upload proportionally very little. Accordingly, point to multipoint systems may implement dynamic bandwidth allocation (DBA) techniques to maximize the data throughput associated with asymmetric, bursty traffic.

Accordingly, it is an object of the present invention to provide a system and method to maximize the bandwidth of point to multipoint systems in accordance with the unique characteristics of point to multipoint systems as between particular portions of the network.

It is an additional object of the present invention to provide a system and method for synchronization of receive and transmit modes of sectors or other portions of an associated group of hub units to maximize the bandwidth of point to multipoint systems.

It is an additional object of the present invention to provide a system and method for sector to sector telemetry in point to multipoint systems.

It is an additional object of the present invention to provide an efficient communication channel for use with the invention systems and methods that allows synchronization of neighboring hubs while permitting rapid dynamic allocation of bandwidth in individual hubs.

It is still an additional object of the present invention to provide a pattern of frequency re-use in a wireless communication system.

It is another object of the present invention to provide a repeatable pattern of frequency re-use in a wireless communication system comprised of sixteen cells in a four-by-four grid using two polarizations per communication frequency.

It is a further object of the present invention to provide a method of reducing co-channel and/or adj acent channel interference by a pattern of frequency re-use.

The present invention provides a wireless communication system according to claim 1 and a method of reducing co-channel interference according to claim 9.

These and other objects, features and technical advantages are achieved by a system and method which operate in a point to multipoint system comprising a plurality of hubs and a plurality of subs distributed within coverage areas associated with the hubs. The point to multipoint system preferably divides its communication bandwidth into channels utilizing spectrum division techniques, such as frequency division, time division, or orthogonal code division. Also, the hubs communicate with the subs within their coverage areas via sector antennas. By utilizing spectrum division and sector antennas, preferred embodiments of the point to multipoint system coordinate channel allocation via a channel reuse plan. Additionally, preferred embodiments divide individual channels into transmit and receive modes via a Time Duplex Division (TDD) scheme via the same channel. In this TDD scheme, a hub transmits information to subs in the transmit mode and receives information from subs in the receive mode. Moreover, the hubs of the point to multipoint system preferably may dynamically allocate bandwidth between the transmit and receive modes to achieve asymmetric communication modes. Also, the preferred embodiment subs utilizing the present invention comprise directional antenna.

Co-channel interference such as in adjacent sectors of neighboring hubs is a significant concern. Specifically, hub to hub exposure is problematic, since hub antennas are typically directed toward other hubs of the network in order to provide composite coverage of a service area. For example, preferred embodiment hubs may utilize sector antennas covering between 30 to 90 degrees in azimuth, which are oriented to face similar sector antennas at neighboring hubs. Sub unit exposure is not as a significant issue for the preferred embodiments point to multipoint systems, because sub units of these point to multipoint systems utilize highly directional antenna. Accordingly, the subs units may not be exposed to significant co-channel interference from other sub units or other hub units.

Channel reuse plans may be utilized to mitigate hub to hub co-channel interference. For example, by carefully assigning channels for use by the hubs of a network, reuse performance of approximately 1 may be achieved. Moreover, through advanced channel planning techniques, such as shown and described in the above referenced patent application, entitled "FREQUENCY REUSE FOR TDD", and as described below, higher channel reuse performance may be achieved.

In another embodiment of the present invention, a pattern of frequency re-use is described where a repeatable pattern of cells is employed to allow for re-use of a number of frequency assignments where there are two polarization modes available per frequency. Such a pattern of frequency re-use is especially useful when the number of frequency assignments, or communication channels, available for operation of a communication system is limited. In order to provide sufficient coverage for a particular operating area, a pattern of cells that re-use the available frequencies must be provided in order to avoid dead spots or to avoid interference between adjacent channels on the frequency spectrum used in the same area, known in the art as "adjacent channel interference" or interference between two cells using the same frequency with the same polarization in adjacent areas, known in the art as "co-channel interference".

Idealizing the shape of the cells in the pattern as circular and further idealizing each cell as having a similar radius, the shape of a repeatable pattern of such cells can be viewed as an overlay on a flat surface. Obviously, such idealizations such as a flat surface and substantially identical cells spaced at uniform distances rarely occur in the real world. However, it is to be understood that the present inventive system and method is not limited to such idealizations but rather is applicable to real world situations where the overall frequency re-use pattern can be used while taking into account minor variations to allow for obstructions, terrain features, dissimilar cell sizes, irregular spacing of cells, etc. While the disclosure of the invention below will discuss an idealized repeatable pattern composed of idealized cells, etc., such idealizations should not be construed as limitations of the invention.

For cells of substantially the same size and circular in shape, one arrangement of those cells in a multi-cell pattern may be seen as a square grid where the edge of two cells that are adjacent in the same rank or the same file are tangent at one point. In such an arrangement, cells that are diagonally adjacent are not tangent. In another multi-cell arrangement, a cell in the pattern is tangent to each of six adjacent cells. Such a pattern would appear as a honeycomb shape if the cells are idealized to be hexagonal in shape.

The inventors have determined empirically that for cells with 90° sectors, a minimum of eight frequency assignments and two polarizations are required for efficient frequency re-use for broadband wireless access systems. This is a reasonable requirement of frequency/polarization assignments for 90° sectorized cells in a time division duplex ("TDD") system considering the size of a typical license allocation of frequencies on a worldwide basis. For example, in Europe, the anticipated license allocation is 2 x 112 MHz or 224 MHz for the 28 GHz band and approximately 500 MHz for the 42 GHz band. Most of the North American broadband wireless access operators have allocations in excess of 200 MHz. An emerging popular channel size is 28 MHz in Europe and 25 MHz in North America. These channel sizes coupled with the anticipated license allocation of frequencies allows for eight or more available frequency channels.

While 90° sectors have some disadvantages over smaller sector sizes, such as 60°, 45°, and 30° sectors, 90° sector size is the baseline for planning for almost all broadband wireless access operators and standards groups. For example, RF performance is somewhat compromised for wide sectors relative to narrow sectors. Cell diameter is reduced thereby requiring a greater number of hubs/cells to cover a given area. Wider sectors also give rise to a greater possibility of co-channel and adjacent channel interference.

Despite the operational drawbacks of 90° sectors, there are significant economical advantages to 90° sector plans. One advantage is the lower cost of outdoor gear. With 90° sectors, fewer sectors and hence fewer radios, antennas, and associated equipment, both primary and redundant, are required when compared with smaller-sized sectors. Additionally, a significant cost to operators are roof rights. Landlords tend to charge for the right to place equipment of the roof of their building based on the number of antennas so 90° sectors translates into lower cost for roof rights. Also, wider sectors provide greater RF coverage which is an important benefit in the early deployment of a system.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, and the advantages thereof, reference is now made to the following descriptions taken in conjunction with the accompanying drawing, in which:
FIGURE 1 depicts an illustrative example of a point to multipoint system arranged in a cluster architecture.
FIGURE 2A depicts an illustrative sector configuration for the point to multipoint system set forth in FIGURE 1.
FIGURE 2B illustrates a sectorized antenna arrangement for a hub for one of the cells in FIGURE 2A.
FIGURE 3 illustrates particular sectors and the propagation of transmissions from hubs to a plurality of subs within the particular sectors.

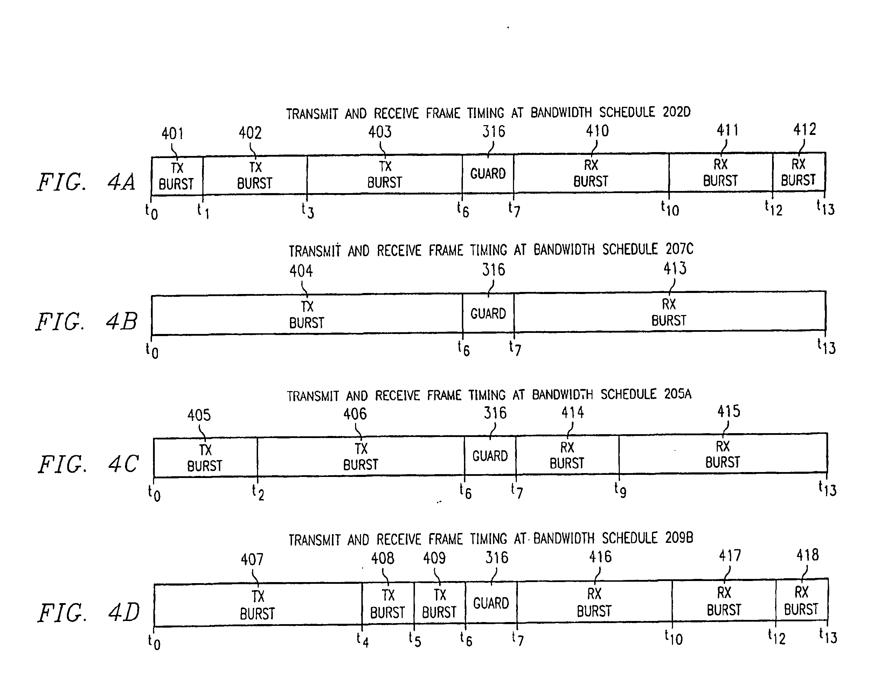

FIGURES 4A to 4D each illustrate a timing diagram for a series ofRX and TX frames associated with opposing sectors of adjacent hubs, not according to the invention;

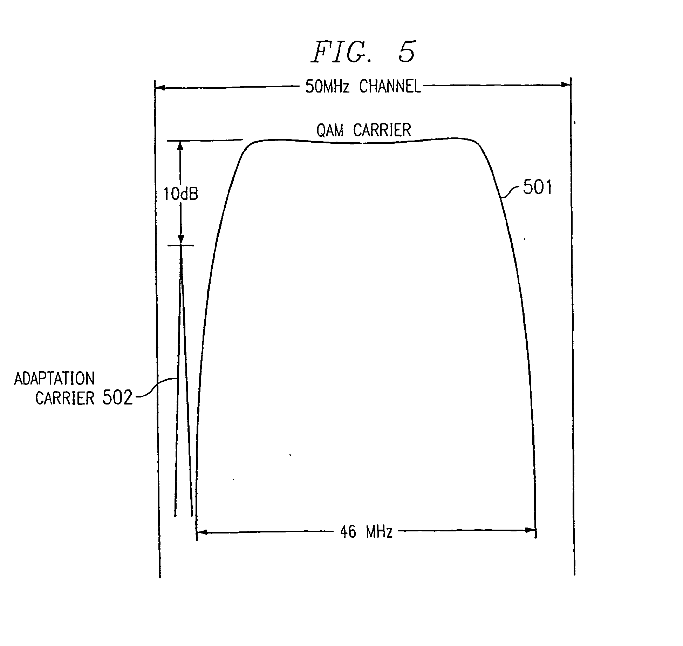

FIGURE 5 illustrates an exemplary power density spectrum for a QAM carrier signal and an associated Adaptation carrier, not according to the invention.
FIGURE 6A illustrates a set of eight frequency channels with two polarizations per frequency channel for use in a frequency re-use pattern.
FIGURE 6B illustrates eight unique cell types using the set of eight frequency channels with two polarizations per frequency channel illustrated in FIGURE 6A.
FIGURE 7 illustrates a repeatable pattern of sixteen cells in a four-by-four rectilinear grid where each cell is divided into four 90° sectors where opposing sectors operate on the same frequency channel with the same polarization.
FIGURE 8 illustrates one group of four cells from the repeatable pattern of sixteen cells in FIGURE 7.
FIGURE 9 illustrates a repeatable pattern of sixteen cells in a four-by-four grid forming a parallelogram where each cell is divided into four 90° sectors where opposing sectors operate on the same frequency channel with the same polarization.
FIGURE 10 illustrates a repeatable pattern of FIGURE 7 where facing sectors operate on the same frequency channel and polarization to allow for transmit and receive synchronization between hub antennas of facing sectors.
FIGURE 11A illustrates the set of eight frequency channels with two polarizations per frequency channel shown in FIGURE 6A indicating those frequency channels and polarizations used in the pattern in FIGURE 10 and those frequency channels and polarizations not used in the pattern of FIGURE 10 that are held in reserve.
FIGURE 11B illustrates eight unique cell types using the set of four frequency channels with two polarizations per frequency channel illustrated in FIGURE 11A as being used in the frequency re-use pattern of FIGURE 10.
FIGURE 12 illustrates one group of four cells from the repeatable pattern of sixteen cells in FIGURE 10.
FIGURE 13 illustrates the repeatable pattern FIGURE 10 with an overlay of additional frequency channel sectors to accommodate an increase in the capacity demands of the users of the system.

### DETAILED DESCRIPTION

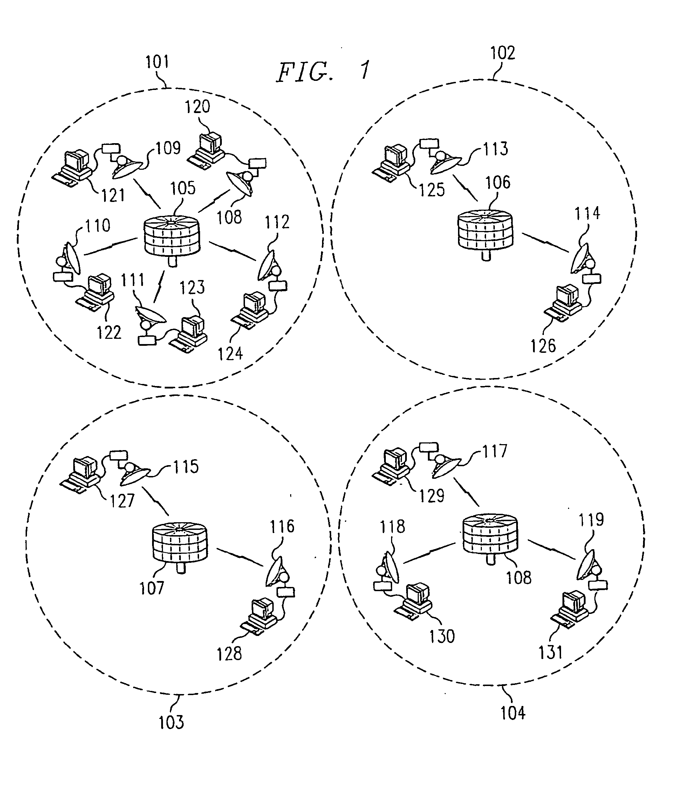

FIGURE 1 illustrates an exemplary point to multipoint system utilizing the present invention. The system is preferably deployed in a cluster configuration. The illustrative cluster consists of a plurality of hubs (105, 106, 107, 108), although clusters in numbers different than the illustrated configuration may be employed according to the present invention. It shall be appreciated that communication networks utilizing the present invention may include additional clusters, either remotely located or adjacently located, with the clusters utilizing the present invention.

Hubs 105, 106, 107, and 108 provide coverage to cells 101, 102, 103, and 104. A plurality of subs (109 - 119) are deployed in cells 101, 102, 103, and 104, respectively. In addition, processor systems (120 - 131) are respectively associated with individual sub units. It shall be appreciated that sub units of a point to multipoint system may be alternatively associated with a LAN network of processors system. Alternatively, the sub units of point to multipoint system may be connected to an intermediate network. For example, a sub unit may be connected to an intermediate ATM switch. It shall further be appreciated that a system employing the present invention may contain an arbitrarily large number of hubs, cells, and sub units. For simplicity of describing the present invention, the exemplary embodiment has been described in terms of four cells.

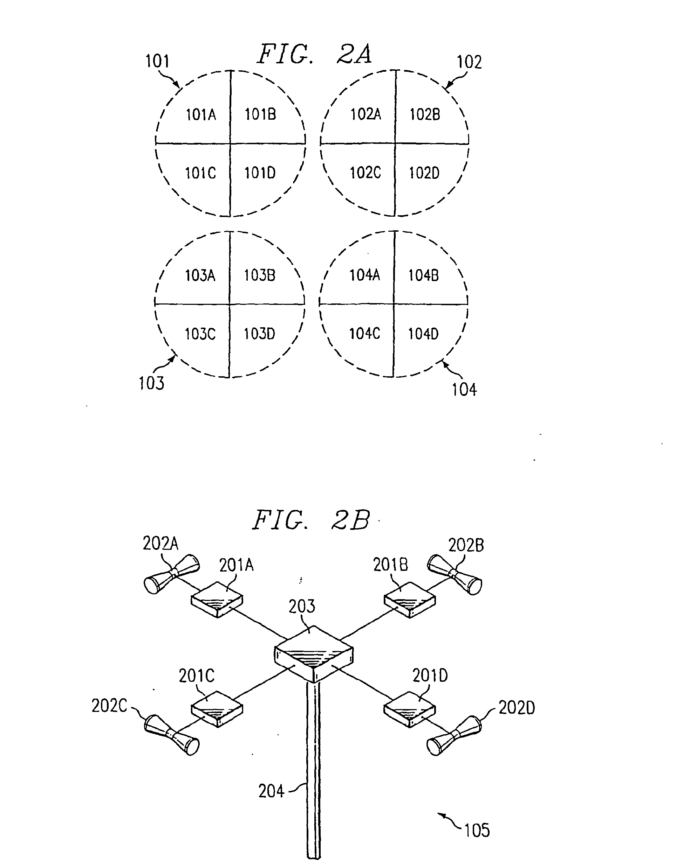

FIGURE 2A illustrates an exemplary sector configuration of the point to multipoint system set forth in FIGURE 1. As previously noted, the system is divided into coverage areas associated with cells 101, 102, 103, and 104. Moreover, cells 101, 102, 103, 104, of the illustrated embodiment are sectorized into 90 degree sectors (101A-101D, 102A-102D, 103A-103D, and 104A-104D), although other sector sizes may be synchronized according to the present invention. Hubs 105, 106, 107, and 108 transmit and receive signals to/from the sectors via sector antennas, such as illustrated in FIGURE 2B for the hub 105. The sector antennas 202A through 202D may utilize a discrete antenna element for each sector. Alternatively, the sector antennas may utilize a plurality of narrow beam antenna elements to synthesize sector coverage. In this configuration, energy from RF signals transmitted from a sector antenna associated with any of sectors 101D, 102C, 103B, and 104A may be detected in the other sector antennas of this group.

The spectrum allocated to the point to multipoint system as a whole is preferably subdivided into channels. Numerous methods of channel division may be utilized with the present invention, such as time division, frequency division channels, frequency hopping channels, and orthogonal code channels. The channels are divided into discrete sets. Additionally, the sets of channels are allocated among the sectors of the point to multipoint system in accordance with a reuse schedule. In this exemplary system, RF signals 302-307 are being transmitted upon the same channel for the purpose of illustrating the present invention. It shall be appreciated that other signaling may occur on other channels concurrently with the exemplary transmit and receive signals.

According to a preferred embodiment, at least adjacent sectors of a particular cell are provided different channel sets according to the channel reuse plan. For example, the channels assigned for use by sectors 104B and 104C are different from the channels assigned for use by sector 104A. However, depending upon the front and back isolation of the sector antenna, side lobe characteristics, and the like, channel sets may be reused in a cell, such as within sector 104B and 104C and/or 104A and 104D.

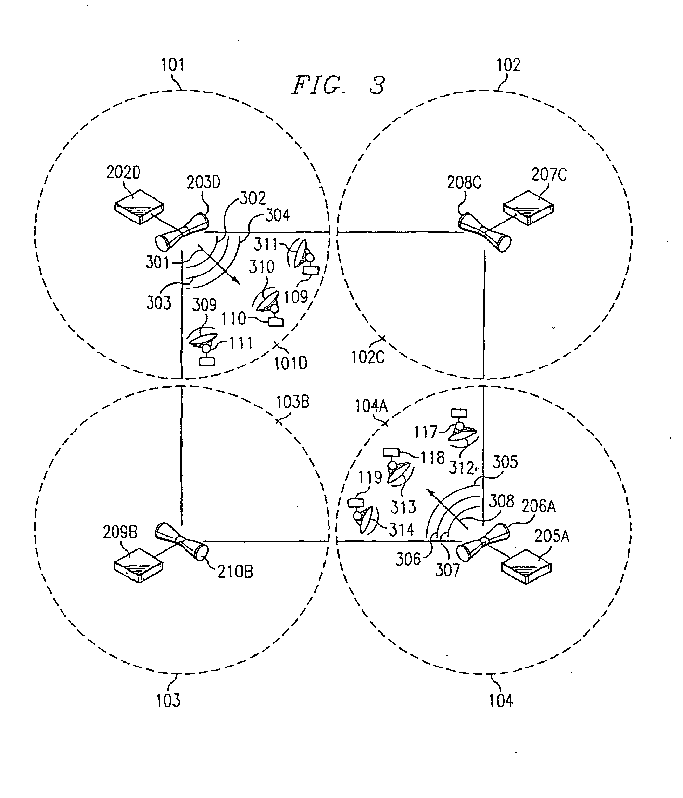

FIGURE 3 illustrates a series of RF transmit signals (301-306) broadcast from hubs 105 and 106, respectively. Hub 105 transmits a series of RF time burst or time slot signals (302, 303, and 304) with the signals propagating in direction 301 within sector 101D. Since hub 105 utilizes a sector antenna, the energy associated with RF signals 302, 303, and 304 propagates through out sector 101D. RF signal 302 comprises information for sub 109. RF signal 303 comprises information for sub 110. RF signal 304 comprises information for sub 111. Similarly, hub 108 transmits a series of RF time burst or time slot signals (305, 306, and 307) with the signals propagating in direction 308 within sector 104A. Since hub 104 utilizes a sector antenna, the energy associated with RF signals 305, 306, and 307 propagates through out sector 104A. RF signal 305 may comprise information for sub 117. RF signal 306 may comprise information for sub 118. RF signal 307 may comprise information for sub 119.

Eventually, RF signals 302, 303, and 304 will propagate beyond the confines of cell 104 into cells 101, 102, and 103. Accordingly, RF signals 302, 303, and 304 could cause co-channel interference in cells 101, 102, and 103. In the preferred embodiment point to multipoint system, the sub units utilize highly directional antennas directed toward an associated hub and therefore generally away from the remaining hubs of a cluster. Accordingly, the subs generally will not experience co-channel interference from RF signals 302, 303, and 304.

However, hubs 105, 106, and 107 will experience co-channel interference if the hubs are in receive mode with respect to the particular channels associated with RF signals 302, 303, and 304 when the RF signals arrive at the particular hub. According to a preferred embodiment, hub 108 utilizes the same set of channels for sector 104A as hub 105 utilizes for sector 101D, hub 106 uses for sector 102c, and as hub 107 uses for sector 103b. Accordingly, RF signals 302, 303, and 304 could cause co-channel interference depending upon their arrival time at hubs 106, 107, and 108. It shall be appreciated that RF signals 302, 303, and 304 will have negligible effect if RF signals 302, 303, 304 arrive when hubs 106, 107, and 108 are in transmit mode. Similarly, RF signals 305, 306, and 307 may cause co-channel interference in hubs 105, 106, and 107, if the hubs are in receive mode with respect to the channels associated with the signals upon their arrival.

Additionally, the subs in sectors 101D and 104A broadcast RF signals 309-314. As previously noted, the sub units of the preferred embodiment of this system utilize highly directional antennas. The architecture of the system is such that the highly directional antennas focus the radiated RF energy within a very narrow beam centered upon the respective hubs. Accordingly, it is unlikely that the subs could couple with another antenna in the system to cause co-channel interference. It shall be appreciated that this exemplary system contemplates that RF signals 302-307 and RF signals 309-314 are being transmitted via the same frequency channel. Accordingly, the exemplary system illustrating the present invention controls the timing of RF signal transmissions in TDMA burst periods.

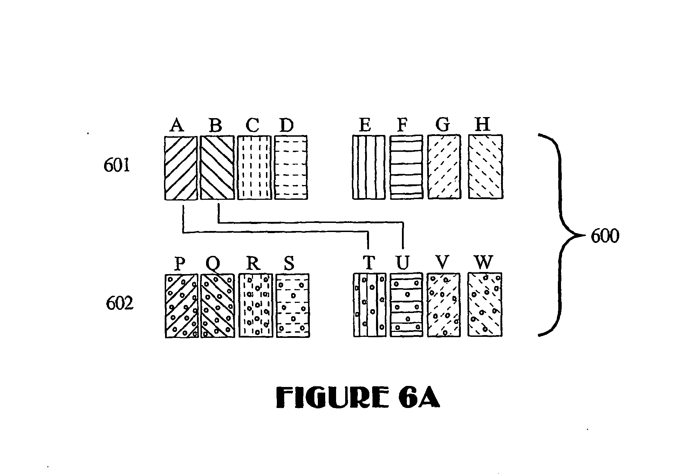

With reference now to FIGURE 6A, the set 600 is a notional depiction of eight available frequency channels, also referred to herein as "frequencies", for a communication system with two polarizations available per frequency channel. The set 601 of frequencies are at one polarization and the set 602 of frequencies is at another polarization. Preferably, the polarizations of the frequency set 601 and the frequency set 602 are mutually orthogonal to minimize the possibility of interference between antennas operating at the same frequency but different polarizations as discussed further below. The polarizations can be, but are not limited to, horizontal and vertical alignments or slant left and slant right alignments.

It should be understood that although the discussion below develops frequency re-use patterns for eight frequencies and two polarizations, the present inventive system and method is not limited to eight frequencies and two polarizations. The principles on which the frequency re-use patterns herein disclosed are applicable likewise apply in situations where more than eight frequencies are available for the communication system deploying a frequency re-use pattern of the present inventive system and method.

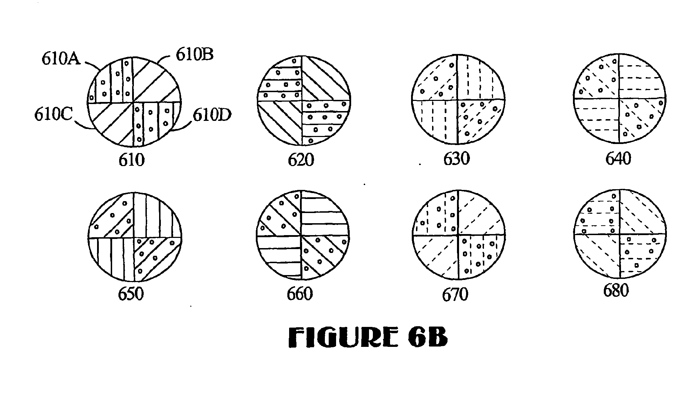

FIGURE 6B depicts eight cells, such as the cells illustrated in FIGURE 2A, where each cell is divided into four 90° substantially non-overlapping sectors. The hub of each cell has at least one antenna per sector, for example the hub 105 shown in FIGURE 2B. As shown in FIGURE 6B, opposing sectors of a cell operate with the same frequency/polarization assignment. Taking cell 610 as an example, sectors 610A and 610D operate at frequency/polarization 601A while sectors 610B and 610C operate at frequency/polarization 602T. Although the sector designations are only shown for the cell 610, is it to be understood that the sector designations apply to every cell and are used throughout the specification and drawings. With eight frequencies and two polarizations per frequency available as shown in FIGURE 6A, there are 16 unique frequency/polarization sector assignments, or "degrees of freedom", available. It is important for minimizing adjacent channel and co-channel interference in a frequency re-use plan to maximize the "distance" between the frequency/polarization sector assignments in a cell, i.e., the largest frequency separation and orthogonal polarization assignment is preferred. Additionally, for adaptive time division duplex systems ("ATDD") maximizing frequency separation minimizes coupling problems associated with independent dynamic asymmetric frame usage within a cell. The pattern of assignment of the 16 degrees of freedom as shown in FIGURE 6A is preferred since that pattern results in the maximum "distance" between sector assignments for a cell. The present inventive system and method contemplates the use of other patterns of assignment of the 16 degrees of freedom.

Using the pattern of sector assignments discussed above, there are eight unique "cell types" available if each of the 16 sector assignments, or degrees of freedom, is used once. Each of the cells in FIGURE 6B is of a unique cell type. The eight cell types will be arranged in a particular manner so as to minimize co-channel and adj acent channel interference while obtaining maximum coverage of an operating area for a communication system which has the frequency/polarization assignments of FIGURE 6A.

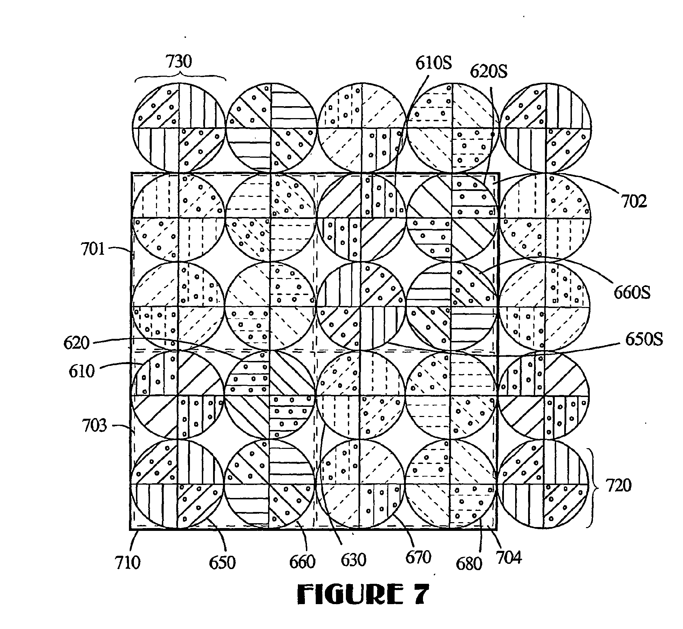

With attention now to FIGURE 7, a section of a multi-cell frequency re-use pattern is depicted. As shown in the Figure, the 16-cell four-by-four rectilinear grid 710 is comprised of the four two-by-two groups, 701 through 704. The 16-cell grid 710 is repeatable vertically and horizontally, referenced to the orientation of FIGURE 7, so as to be able to cover an area that is larger than the area covered by one instance of the grid 710. The cells in the grid 710 are arranged so that each cell occupies a unique rank and file position, where all the cells on the bottom row of FIGURE 7 are in the rank designated 720 and where all the cells in the leftmost column of FIGURE 7 are in the file designated 730. The cells in the 16-cell rectilinear grid 710 are arranged so that rank and file adjacent cells are tangent but diagonally adjacent cells are not tangent. The rank and file designations are arbitrary and are only used as a convenience to accurately describe the arrangement of cells in the pattern. The rank and file designations are not part of the invention and should not be construed as limiting the invention in any way.

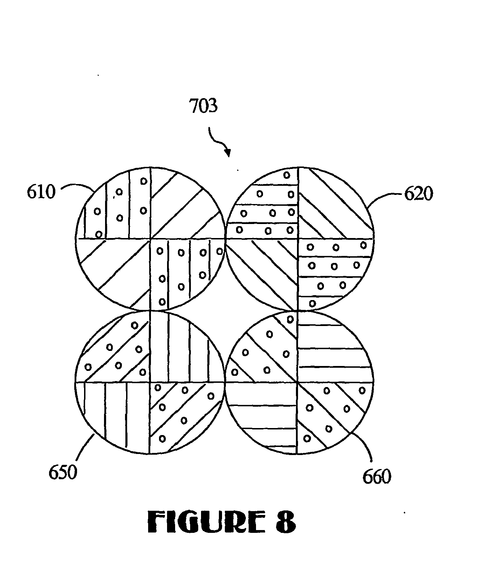

Referring now to FIGURE 8, the 4-cell group 703, located in the lower left-hand quadrant of the rectilinear grid 710 in FIGURE 7 is depicted. Each one of the four cells in the cell group 703 is a unique one of the eight cell types discussed above and shown in FIGURE 6B. The cell 650 is tangent to its rank and file adjacent cells, i.e., the cell 650 is tangent to the cells 610 and 660. The cells 610, 620, 650, and 660 are oriented in the cell group 703 such that the polarization of facing cells for rank and file adjacent cells is not the same. For example, the sector 650B in the cell 650 is of one polarization while its facing sector in the rank adjacent cell 660, the sector 660A is of the other polarization (reference the two polarizations in FIGURE 6A). By inspection of FIGURE 7 and FIGURE 8, it is shown that for each of the four cell groups, 701 through 704, the polarization of facing cells for rank and file adjacent cells is not the same. This orientation of the cells within a group works to minimize co-channel and adjacent channel interference as discussed above.

Referring back to FIGURE 7, and with attention now to the cell group 704, each one of the four cells in the cell group 704 is a unique one of the eight cell types discussed above and shown in FIGURE 6B. Additionally, each of the cells in the cell group 704 is of a different cell type from the cell types used in the cell group 703. In other words, of the eight cell types depicted in FIGURE 6B, four of those cell types are used in the cell group 703 and the other four of those cell types are used in the cell group 704. The orientation of the cells in the cell group 704 is similar to the orientation of the cells in the cell group 703 as discussed above: the polarization of facing cells for the rank and file adjacent cells is not the same. Furthermore, and preferably, the polarization of facing cells for the rank adjacent cells for the cells 620, 660, 630, and 670 are different, as shown in FIGURE 7.

Having discussed the orientation and arrangement of the cells in the four cell groups, it should be noted that there is a relationship between the cells in the cell groups 703 and 702 as well as a relationship between the cells in the cell groups 704 and 701. Referring to the cell groups 703 and 702 in FIGURE 7, it can be seen that the same four cell types appear in each of the cell groups and that the arrangement of the cells in each of the cell groups is the same, i.e., the cell 650 in the cell group 703 is the same cell type as the cell 650S in the cell group 702. However, the frequency/polarization assignments for each cell have been swapped between the pairs of opposing sectors. Whereas for the cell 650 in the cell group 703 the upper right and lower left sectors are of a first frequency/polarization combination, the same first frequency/polarization combination appears in the upper left and lower right sectors of the cell 650S in the cell group 702. The same is true for each cell in groups 703 and 702. Another way to view the relationship is that the cells in the cell group 702 have been rotated 90° from the orientation of the cells in the cell group 703. Likewise, the cells in the cell groups 704 and 701 are related in the same manner.

The reason for the change in orientation of the cells between cell groups 703/702 and 704/701 is to minimize co-channel interference between the sectors of the cells of the same cell type. If, for instance, the cell 650S was of the same orientation as the cell 650, the facing sectors 650A of the cell 650 and 650SC of the cell 650S would be operating on the same frequency with the same polarization. If a cell radius is designated as "R", the distance between the hubs of the cells 650 and 650S is 4R√2. This distance may be insufficient to prevent co-channel interference. The swap of frequency/polarizations for the opposing sectors helps to overcome the problem of insufficient distance between the hubs. Using the frequency re-use plan of FIGURE 7, the distance between hubs with facing sectors operating with the same frequency/polarization is 8R √2, which is double the distance from the example above. The pattern described above for the four-by-four rectilinear grid 710 can be repeated horizontally and vertically in order to provide coverage for an area larger than the grid 710. As shown in FIGURE 7, a rank and file of cells are repeated to illustrate the idea of horizontal and vertical repeatability. It is to be understood that the present invention is not limited to the specific number of cells shown in FIGURE 7 nor to the specific assignment of cells types or sector orientations. It is contemplated that any repeatable rectilinear grid using the concepts described above are within the scope of the patent.

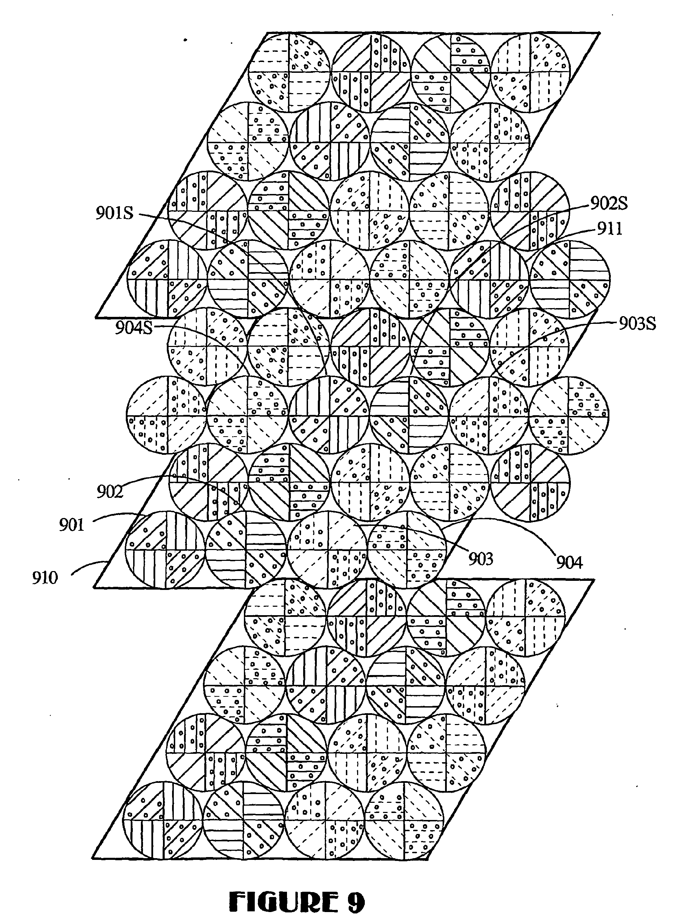

Turning now to FIGURE 9, a different pattern of cells is depicted, referred to herein as the "shift and squish" pattern. As can be seen from FIGURE 7, the repeatable pattern of the rectilinear grid 710 allows for a sizeable area of dead space between the cells. The shift and squish pattern 910 eliminates much of that interstitial dead space. As with the rectilinear grid 710, the shift and squish pattern 910 comprises 16 cells of two each of eight cell types. The lower two rows of cells in the shift and squish pattern 910, similar to the lower two ranks of cells in the rectilinear grid pattern 710, are composed of one each of the eight cell types shown in FIGURE 6B. Also, the two upper rows of cells in the shift and squish pattern 910 are composed of another set of one each of the same eight cell types as the lower two rows, similar to the upper two ranks of cells in the rectilinear grid pattern 710 being composed of another set of one each of the same eight cell types as the lower two ranks. However, unlike the rectilinear grid 710, the upper to rows of cells of the shift and squish pattern 910 are not arranged in the same relative orientation as the lower two rows of cells within the shift and squish pattern 910. For example, the cells 901 through 904 are arranged in the order, from left to right, 901/902/903/904 while the corresponding cells 901S through 904S are arranged, left to right, 904S/901S/902S/903S. The same relationship holds for the cells in the other two rows of the grid 910. Additionally, the frequency/polarization assignments of the two pairs of opposing sectors for the cells of a corresponding cell type are swapped.

The shift and squish pattern 910 is repeatable as shown in FIGURE 9. The 16 cells in the pattern are arranged so that no one cell is tangentially adjacent, in any direction, to two cells of the same cell type. This relationship holds true as the pattern is repeated as shown in FIGURE 9.

The spacing between hubs of cells having facing sectors operating with the same frequency/polarization in the shift and squish pattern 910, such as cells 901 and 911, is approximately 10R, which is approximately 88% of the distance between hubs with facing sectors operating with the same frequency/polarization in the rectilinear grid 710. The distance between the hubs of cells 901 and 911 should be sufficient to prevent co-channel interference.

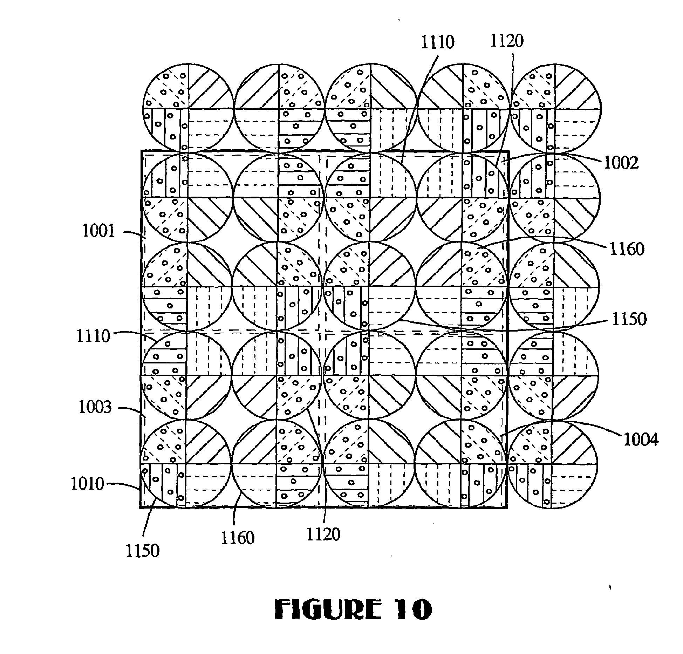

With reference now to FIGURE 10, a section of another multi-cell frequency re-use pattern is depicted. The 16-cell fow-by-four rectilinear grid 1010 is comprised of the four two-by-two groups, 1001 through 1004. The 16-cell grid 1010 is repeatable vertically and horizontally, referenced to the orientation of FIGURE 10, so as to be able to cover an area that is larger than the area covered by one instance of the grid 1010. The cells in the grid 1010, similar to the cells in the grid 710 of FIGURE 7, are arranged so that each cell occupies a unique rank and file position and so that rank and file adjacent cells are tangent but diagonally adjacent cells are not tangent.

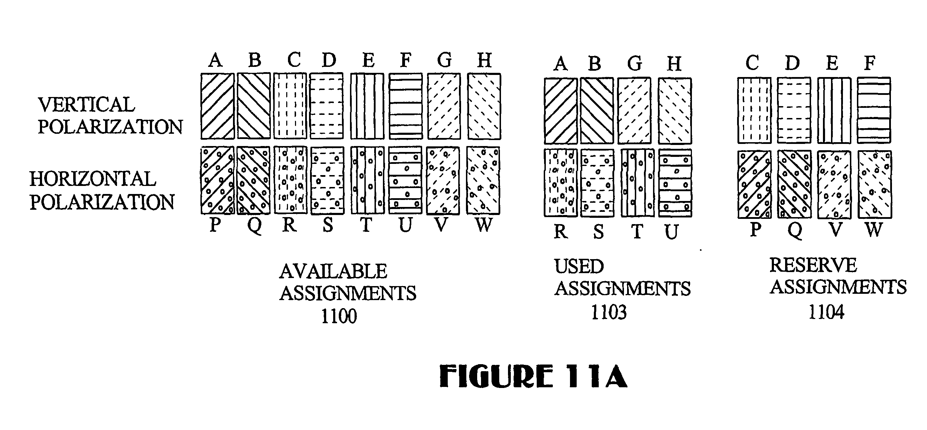

FIGURE 11A depicts the set 1100 of the eight available frequency channels used for a communication system with two polarizations available per frequency channel, similar to the set of frequencies 600 in FIGURE 6A. Of the 16 frequency/polarization degrees of freedom in the set 1100, the set 1103 of eight frequency/polarization degrees of freedom and the set 1104 of the eight other frequency/polarization degrees of freedom are depicted. The set 1103 of degrees of freedom are used in the frequency re-use pattern of FIGURE 10. The set 1104 of degrees of freedom are not necessary to populate the cells of the frequency re-use pattern of FIGURE 10 and are held in reserve for possible late use, as described below.

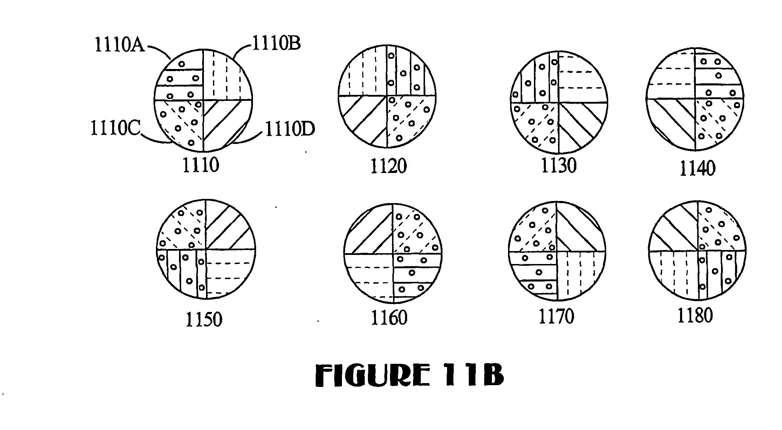

FIGURE 11B shows eight cell types used in the frequency re-use pattern rectilinear grid 1010 of FIGURE 10. As shown in FIGURE 11B, each sector of a particular cell of each of the eight cell types operates with unique frequency/polarization assignment relative to the other sectors of that cell. For each cell type, a pair of adjacent sectors operate with a first polarization and the other pair of adjacent sectors operate with a second polarization of the two available polarizations. Taking cell 1110 as an example, each sector 1110A through 1110D operates at a different frequency/polarization each from the other. With four frequencies and two polarizations per frequency available as shown in FIGURE 11A, there are eight degrees of freedom available. With the limitations to be discussed below, eight different cell types are used to populate the rectilinear grid 1010.

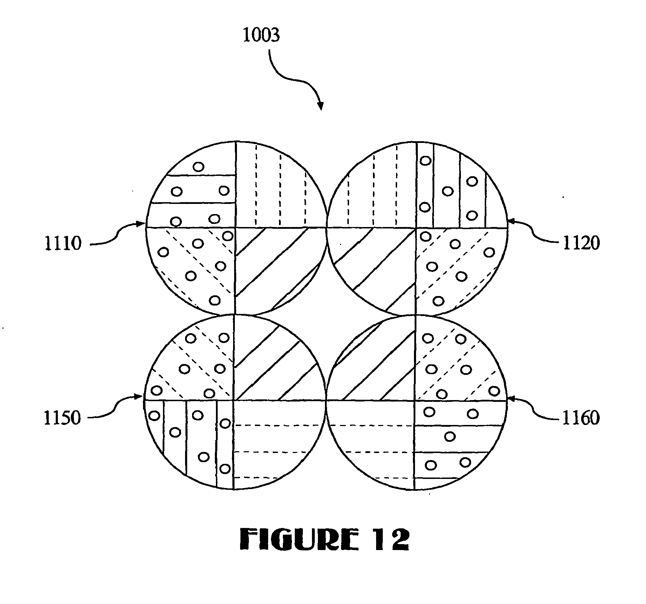

Referring now to FIGURE 12, the 4-cell group 1003, located in the lower left-hand quadrant of the rectilinear grid 1010 in FIGURE 10 is depicted. Each one of the four cells in the cell group 1003 is a unique one of the eight cell types discussed above and shown in FIGURE 11B. Additionally, facing sectors for each cell in the 4-cell group 1003 are of the same frequency/polarization, regardless of whether the cell is rank and file adjacent or diagonally adjacent. For example, as shown in FIGURE 12, the center-facing sectors for all four cells, 1110D, 1120C, 1150B, and 1160A, are all of the same frequency/polarization assignment. Additionally, the sector 1110C of the cell 1110 and the sector 1150A of the cell 1150 are facing and have the same frequency/polarization assignment. The same holds for the following sectors: 1150D and 1160C, 1160B and 1120D, and 1110B and 1120A. Furthermore, the opposing sectors of the diagonally adjacent cells in the 4-cell group 1003 have the same frequency/polarization assignment: the sectors 1150C and 1120B and the sectors 1110A and 1160D. These frequency/polarization assignments allow for repeatability of the pattern of rectilinear grid 1010, as seen in FIGURE 10, while minimizing co-channel and adjacent channel interference.

Referring back to FIGURE 10, and with attention now to the cell group 1004, each one of the four cells in the cell group 1004 is a unique one of the eight cell types discussed above and shown in FIGURE 11B. Additionally, each of the cells in the cell group 1004 is of a different cell type from the cell types used in the cell group 1003. In other words, of the eight cell types depicted in FIGURE 11B, four of those cell types are used in the cell group 1003 and the other four of those cell types are used in the cell group 1004. The orientation of the cells in the cell group 1004 is similar to the orientation of the cells in the cell group 1003 as discussed above: facing sectors for each cell in the 4-cell group 1004 are of the same frequency/polarization, regardless of whether the cell is rank and file adjacent or diagonally adjacent.

Having discussed the orientation and arrangement of the cells in the four cell groups, it should be noted that there is a relationship between the cells in the cell groups 1003 and 1002 as well as a relationship between the cells in the cell groups 1004 and 1001. Referring to the cell groups 1003 and 1002 in FIGURE 10, it can be seen that the same four cell types appear in each of the cell groups and that the arrangement of the cells and the orientation of the sectors within the cells in each of the cell groups is the same, i.e., the cell 1150 in the cell group 1003 is the same cell type as the cell 1150s in the cell group 1002. Likewise, the cells in the cell groups 1004 and 1001 are related in the same manner.

The rectilinear grid 1010 can be repeated horizontally and vertically similar to the repeatability of the rectilinear grid 710. Note that all of the inward-facing sectors of any two-by-two grid of four cells within the repeated pattern have the same frequency/polarization assignments. Such an arrangement allows for the synchronization of those inward-facing sectors as described more fully above.

The distance between any two facing sectors with the same frequency/polarization assignment that are not adjacent facing sectors is 6R √2 . This distance should be sufficient to prevent co-channel interference between the non-adjacent facing sectors with the same frequency/polarization assignment. If there is co-channel interference, the two groups of four cells that have the interfering non-adjacent facing sectors can also be synchronized to avoid the co-channel problem.

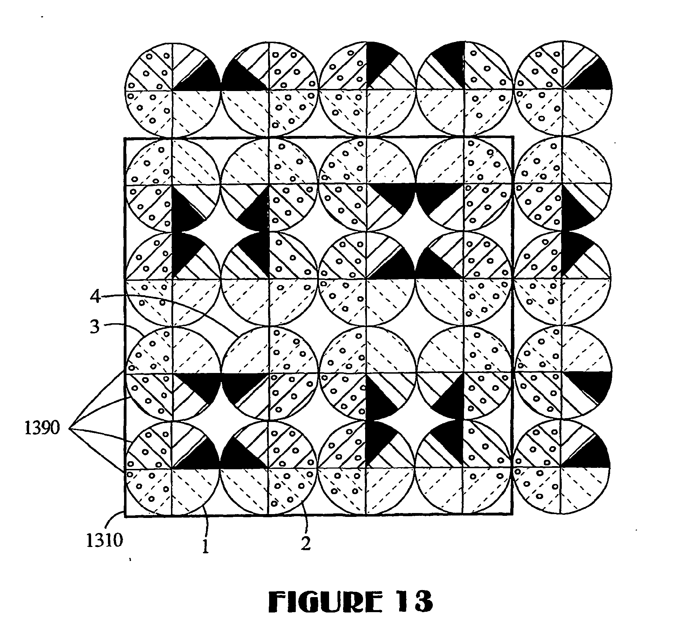

With reference directed towards FIGURE 13, a rectilinear grid 1310 is shown which is similar to the rectilinear grid 1010 of FIGURE 10. However, the grid 1310 includes sector overlays for those sectors, herein referred to as incumbent sectors, for which the capacity of the system is insufficient to support the user demands in those sectors. The added sector overlays are indicative of an added antenna and corresponding circuitry at the hub of the cell in which the overlay lies, as is known in the art. The added sector overlay typically is not a simple replacement for the incumbent sector. The added overlay operates at a different frequency than the incumbent sector but with the same polarization. This configuration allows for the sharing of protection, or redundant, equipment between the incumbent and overlay sectors. The size of the overlay sectors is typically equal to or less than the size of the incumbent sector. As shown in FIGURE 13, the overlay sectors are 45° sectors, but the present inventive system and method is not limited to 45° sectors. Additionally, FIGURE 13 shows the overlay sectors 1390 added to one of each of the sectors of the four cells 1 through 4, which is merely an exemplary use of overlay sectors. The present inventive system and method is not limited to adding an overlay sector to groups of four facing sectors and it contemplates adding fewer or more overlay sectors as required by user demand- Adding overlay sectors to each of four facing sectors of four adjacent cells enables the four added overlay sectors to be synchronized in a manner similar to the synchronization of the underlying four incumbent sectors. Naturally, less than four overlay sectors can be added and synchronized as well.

## Claims

1. A wireless communication system including a repeatable pattern of frequency reuse, comprising:
sixteen circular cells (610-680) of the same radius arranged in a four-by-four grid (710) such that no two cells overlap and where each cell is tangent with its adjacent rank and file neighbors, wherein each cell includes a hub (105) with four antennas (202A-202D) wherein each antenna services a separate one of four non-overlapping ninety degree sectors and is capable of communicating on each of eight frequencies and on either of two polarizations per frequency, whereby for each hub (105) one set of opposing ninety degree sectors communicate on a one of said eight frequencies at a one of said polarizations and the other set of opposing ninety degree sectors communicate on a different one of said eight frequencies at the other of said polarizations, **characterised by**
eight cell types where each cell type communicates over a unique combination of frequencies with two polarization modes available per frequency;
a first and a second group (701, 702) of four cells, each group comprising a two-by-two grid of cells such that,
said first group (701) of four cells comprising four different cell types of said eight cell types, said cells arranged so that facing sectors of rank and file adjacent cells are of a different polarity, and
said second group (702) of four cells comprising the remaining four different cell types, said cells arranged so that facing sectors of rank and file adjacent cells are of a different polarity;
a third and a fourth group (703, 704) of four cells, each group comprising a two-by-two grid of cells such that,
said third group (703) of four cells comprising the same four cell types as said first group wherein the frequency and polarization assignments are interchanged between the pairs of opposing sectors for each cell, said four cells arranged identically to the cells in said first group; and
said fourth group (704) of four cells comprising the same four cell types as said second group wherein the frequency and polarization assignments are interchanged between the pairs of opposing sectors for each cell, said four cells arranged identically to the cells in said second group;
wherein said four groups (701-704) of cells are arranged in said four-by-four grid so that said first and third group of cells are not rank and file adjacent and so that facing cells between rank and file adjacent groups are of different frequencies.

2. The system of Claim 1 wherein said polarizations are mutually orthogonal.

3. The system of Claim 1 or 2 wherein the communication system is a time division duplex system.

4. The system of Claim 3 wherein the communication system is an adaptive time division duplex system.

5. The system of one of the preceding Claims wherein said eight frequencies are in the millimeter frequency range.

6. The system of Claim 5 wherein said eight frequencies are each in the range of 10-60 GHz.

7. The system of one of the preceding Claims wherein said sixteen cells (610-680) are arranged in a four-by-four square grid such that the distance between the centers of any two adjacent cells is twice a cell radius.

8. The system of one of Claims 1 to 7 wherein said sixteen circular cells are arranged in a repeatable four-by-four grid forming a parallelogram so that the edge of any one cell is tangent to the edge of six other cells and so that the centers of each cell are collinear wherein facing sectors of adjacent cells of each group are of a different polarity, whereby
said first and second groups of cells are arranged so that each cell of each group is adjacent to and tangent to at least one cell of the other group of cells;
said second and third groups of cells are arranged so that each cell of each group is adjacent to and tangent to at least one cell of the other group wherein no cell adjacent to a cell in the third group is also adjacent to a cell in the first group with a corresponding combination of frequencies as said cell in third group; and
said third and fourth groups of cells are arranged so that each cell of each group is adjacent to and tangent to at least one cell of the other group wherein no cell adjacent to a cell in the fourth group is also adjacent to a cell in the second group with a corresponding combination of frequencies as said cell in the fourth group.

9. A method of reducing co-channel interference in an orthogonal repeatable pattern of cells in a multi-cell pattern of cells forming a rectilinear grid (710) in a communication system wherein each cell includes a hub (105) with four antennas (202A-202D) wherein each antenna services a separate one of four non-overlapping ninety degree sectors and is capable of communicating in one of two polarization modes for each communication frequency used by the communication system, whereby for each hub (105) one set of opposing ninety degree sectors communicates on a one of said communication frequencies at a one of said polarizations and the other set of opposing ninety degree sectors communicates on a different one of said communication frequencies at the other of said polarizations, the method **characterised by** the steps of:
(a) providing eight cell types wherein each cell type comprises a unique combination of said two sets of frequency and polarization;
(b) providing two sub-clusters (701, 702) of cells each of four cells arranged in a two-by-two grid wherein a first sub-cluster comprises four cells each of a different cell type of said eight cell types and wherein a second sub-cluster comprises four cells each of a different cell type of the remaining four cell types;
(c) alternating said two sub-clusters (701, 702) orthogonally within the multi-cell pattern of cells; and
(d) orienting each pair of alternate diagonal cells within the multi-cell pattern of cells ninety degrees relative to each other.

10. The method of Claim 9 wherein adjacent channel interference is reduced.

11. The method of Claim 9 or 10 wherein said polarizations are mutually orthogonal.

12. The method of Claim 9, 10, or 11 wherein the number of frequencies is eight.

13. The method of Claim 9, 10, or 11 wherein the number of frequencies is at least eight.

14. The method of Claim 13 wherein each cell type is repeated once within the pattern.

15. The method of one of Claims 11 to 14 wherein the communication system is a time division duplex system.

16. The method of Claim 15 wherein the communication system is an adaptive time division duplex system.

17. The method of Claim 12 or 13 wherein said eight frequencies are in the millimeter frequency range.

18. The method of Claim 17 wherein said eight frequencies are each in the range of 10-60 GHz.

## Patentansprüche

1. Drahtloses Kommunikationssystem mit Wiederverwendung eines wiederholbaren Frequenzmusters umfassend:
sechzehn kreisförmige Zellen (610-680) desselben Radius, die derart auf einem Vier-mal-Vier-Gitter angeordnet sind, daß sich jeweils keine zwei Zellen überlappen, und wobei sich jede Zelle mit ihren angrenzenden Stufen- und Reihennachbarn berührt, wobei jede Zelle einen Hub (105) mit vier Antennen (202A-202D) umfaßt, wobei jede Antenne einen anderen von vier nichtüberlappenden Neunziggradwinkelsektoren bedient und geeignet für die Übertragung auf jeder von acht Frequenzen und in jeder von zwei Polarisationen pro Frequenz ist, wobei für jeden Hub (105) ein Satz von entgegengesetzten Neunziggradsektoren auf einer der acht Frequenzen mit einer der Polarisationen überträgt und der anderen Satz von entgegengesetzten Neunziggradsektoren auf einer anderen der acht Frequenzen mit der anderen Polarisation überträgt, **gekennzeichnet durch**
acht Zellentypen, wobei jeder Zellentyp über eine eindeutige Frequenzkombination mit zwei pro Frequenz verfügbaren Polarisationsmoden überträgt;
eine erste und eine zweite Gruppe (701, 702) von vier Zellen, wobei jede Gruppe ein Zwei-mal-Zwei-Zellengitter umfaßt, so daß
die erste Gruppe (701) von vier Zellen vier verschiedene Zellentypen von den acht Zellentypen umfaßt, wobei die Zellen derart angeordnet sind, daß die einander zugewandten Sektoren von Zellen, die in Stufe und Reihe benachbart sind, verschiedene Polaritäten haben, und
die zweite Gruppe (702) von vier Zellen die verbleibenden vier verschiedenen Zellentypen umfaßt, wobei die Zellen derart angeordnet sind, daß die einander zugewandten Sektoren von Zellen, die in Stufe und Reihe benachbart sind, verschiedene Polaritäten haben;
eine dritte und eine vierte Gruppe 703, 704) von vier Zellen, wobei jede Gruppe ein Zwei-mal-Zwei-Zellengitter umfaßt, so daß
die dritte Gruppe (703) von vier Zellen dieselben vier Zellentypen wie die erste Gruppe umfaßt, wobei die Frequenz- und Polarisationszuordnungen zwischen den Paaren der entgegengesetzten Sektoren für jede Zelle vertauscht sind und die vier Zellen identisch zu den Zellen der ersten Gruppe angeordnet sind; und
die vierte Gruppe (704) von vier Zellen dieselben vier Zellentypen wie die zweite Gruppe umfaßt, wobei die Frequenz- und Polarisationszuordnungen zwischen den Paaren der entgegengesetzten Sektoren für jede Zelle vertauscht sind und die vier Zellen identisch zu den Zellen der zweiten Gruppe angeordnet sind;
wobei die vier Gruppen (701-704) von Zellen in einem Vier-mal-Vier-Gitter angeordnet sind, so daß die erste und die dritte Gruppe von Zellen nicht Stufen- und Reihennachbarn sind und so daß die einander zugewandten Zellen zwischen in Stufe und Reihe benachbarten Gruppen unterschiedliche Frequenzen haben.

2. Das System nach Anspruch 1, wobei die Polarisationen senkrecht zueinander sind.

3. Das System nach Anspruch 1 oder 2, wobei das Kommunikationssystem ein Zeitduplex-System ist.

4. Das System nach Anspruch 3, wobei das Kommunikationssystem ein angepaßtes Zeitduplex-System ist.

5. Das System nach einem der vorangegangenen Ansprüche, wobei die acht Frequenzen im Millimeter-Frequenzbereich liegen.

6. Das System nach Anspruch 5, wobei die acht Frequenzen alle im Bereich von 10-60 GHz liegen.

7. Das System nach einem der vorangegangenen Ansprüche, wobei die sechzehn Zellen (610-680) in einem quadratischen Vier-mal-Vier-Gitter angeordnet sind, so daß der Abstand zwischen den Zentren von jeweils zwei benachbarten Zellen der doppelte Zellenradius ist.

8. Das System nach einem der Ansprüche 1 bis 7, wobei die sechzehn kreisförmigen Zellen in einem wiederholbaren Vier-mal-Vier-Gitter ein Parallelogramm bildend angeordnet sind, so daß sich die Kante jeweils einer Zelle mit den Kanten von sechs anderen Zellen berührt, und so daß die Zentren jeder Zelle auf einer Linie liegen, wobei die gegenüberliegenden Sektoren von benachbarten Zellen von jeder Gruppe eine andere Polarität haben, wobei
die erste und die zweite Gruppe von Zellen derart angeordnet sind, daß jede Zelle von jeder Gruppe angrenzend und sich berührend mit mindestens einer Zelle aus der anderen Gruppe von Zellen ist;
die zweite und die dritte Gruppe von Zellen derart angeordnet sind, daß jede Zelle von jeder Gruppe angrenzend und sich berührend mit mindestens einer Zelle aus der anderen Gruppe ist, wobei keine an eine Zelle in der dritten Gruppe angrenzende Zelle ebenfalls an eine Zelle der ersten Gruppe mit einer entsprechenden Kombination von Frequenzen wie die Zelle in der dritten Gruppe angrenzt; und
die dritte und die vierte Gruppe von Zellen so angeordnet sind, daß jede Zelle aus jeder Gruppe an mindestens eine Zelle der anderen Gruppe angrenzt und sich berührt, wobei keine an eine Zelle der vierten Gruppe angrenzende Zelle ebenfalls an eine Zelle der zweiten Gruppe mit einer entsprechenden Kombination von Frequenzen wie die Zelle in der vierten Gruppe angrenzt.

9. Verfahren zur Verringerung der Kanalinterferenz bei einer orthogonalen wiederholbaren Zellenstruktur in einer ein geradliniges Gitter (710) bildenden Vielzellenstruktur in einem Kommunikationssystem, wobei jede Zelle einen Hub (105) mit vier Antennen (202A-202D) umfaßt, wobei jede Antenne einen anderen von vier nichtüberlappenden Neunziggradwinkelsektoren bedient und geeignet für die Übertragung in jeder von zwei Polarisationsmoden auf jeder von dem Kommunikationssystem verwendeten Übertragungsfrequenz ist, wobei für jeden Hub (105) ein Satz von entgegengesetzten Neunziggradsektoren auf einer der Übertragungsfrequenzen mit einer der Polarisationen überträgt und der anderen Satz von entgegengesetzten Neunziggradsektoren auf einer anderen der Übertragungsfrequenzen mit der anderen Polarisation überträgt, **gekennzeichnet durch** die Schritte:
(a) Vorsehen von acht Zellentypen, wobei jeder Zelltyp eine eindeutige Kombination von zwei Sätzen aus Frequenz und Polarisation umfaßt;
(b) Vorsehen von zwei Unterclustern (701, 702) von Zellen, wobei jeweils vier Zellen auf einem Zwei-mal-Zwei-Gitter angeordnet sind, wobei ein erster Untercluster vier Zellen umfaßt, die jeweils von einem anderen Zelltyp der acht Zellentypen sind, und wobei ein zweiter Untercluster vier Zellen umfaßt, die jeweils von einem anderen Zelltyp der verbleibenden vier Zellentypen sind;
(c) abwechselnd orthogonales Anordnen der zwei Untercluster (701, 702) in der Vielzellenstruktur der Zellen; und
(d) Ausrichten jedes Paares aus abwechselnden diagonalen Zellen in der Vielzellenstruktur der Zellen mit neunzig Grad relativ zueinander.

10. Verfahren nach Anspruch 9, wobei die Interferenz benachbarter Kanäle verringert wird.

11. Verfahren nach Anspruch 9 oder 10, wobei die Polarisationen senkrecht zueinander sind.

12. Verfahren nach Anspruch 9,10 oder 11, wobei die Anzahl der Frequenzen acht ist.

13. Verfahren nach Anspruch 9,10 oder 11, wobei die Anzahl der Frequenzen mindestens acht ist.

14. Verfahren nach Anspruch 13, wobei jeder Zelltyp einmal innerhalb der Struktur wiederholt wird.

15. Verfahren nach einem der Ansprüche 11 bis 14, wobei das Kommunikationssystem ein Zeitduplex-System ist.

16. Verfahren nach Anspruch 15, wobei das Kommunikationssystem ein angepaßtes Zeitduplex-System ist.

17. Verfahren nach Anspruch 12 oder 13, wobei die acht Frequenzen im Millimeterfrequenzbereich liegen.

18. Verfahren nach Anspruch 17, wobei die acht Frequenzen alle im Bereich von 10-60 GHz liegen.

## Revendications

1. Système de communication sans fil comportant une configuration répétitive de réutilisation de fréquence, comprenant :
seize cellules circulaires (610-680) de même rayon disposées sur une grille de quatre sur quatre (710) de telle façon que deux cellules ne se chevauchent pas, et dans lequel chaque cellule est tangente à des voisins de la rangée et de la file qui lui sont adjacentes, dans lequel chaque cellule comporte un concentrateur (105) à quatre antennes (202A-202D), chaque antenne desservant l'un, distinct, de quatre secteurs de quatre-vingt-dix degrés ne se chevauchant pas et étant capable de communiquer sur chacune de huit fréquences et sur l'une ou l'autre de deux polarisations par fréquence, de sorte que, pour chaque concentrateur (105), un ensemble de secteurs de quatre-vingt-dix degrés opposés communiquent sur l'une desdites huit fréquences avec l'une desdites polarisations et l'autre ensemble de secteurs de quatre-vingt-dix degrés opposés communiquent sur l'une, différente, desdites huit fréquences avec l'autre desdites polarisations, **caractérisé par** :
huit types de cellules, où chaque type de cellule communique par l'intermédiaire d'une combinaison unique de fréquences avec deux modes de polarisation disponibles par fréquence ;
un premier et un deuxième groupe (701, 702) de quatre cellules, chaque groupe comprenant une grille de deux sur deux de cellules, de telle façon que :
ledit premier groupe (701) de quatre cellules comprenne quatre types de cellules différents desdits huit types de cellules, lesdites cellules étant disposées de façon que des secteurs en vis-à-vis de cellules se situant dans des rangées et des files adjacentes aient une polarité différente, et
ledit deuxième groupe (702) de quatre cellules comprenne les quatre types de cellules différents restants, lesdites cellules étant disposées de façon que des secteurs en vis-à-vis de cellules se situant dans des rangées et des files adjacentes aient une polarité différente ;
un troisième et un quatrième groupe (703, 704) de quatre cellules, chaque groupe comprenant une grille de deux sur deux cellules, de telle façon que :
ledit troisième groupe (703) de quatre cellules comprenne les quatre mêmes types de cellules que ledit premier groupe, les affectations de fréquence et de polarisation étant échangées entre les paires de secteurs opposés pour chaque cellule, lesdites quatre cellules étant disposées de façon identique aux cellules dudit premier groupe ; et
ledit quatrième groupe (704) de quatre cellules comprenant les quatre mêmes types de cellules que ledit deuxième groupe, les affectations de fréquence et de polarisation étant échangées entre les paires de secteurs opposés pour chaque cellule, lesdites quatre cellules étant disposées de façon identique aux cellules dudit deuxième groupe ;
dans lequel lesdits quatre groupes (701-704) de cellules sont disposés dans ladite grille de quatre sur quatre afin que lesdits premier et troisième groupes de cellules ne soient pas dans des rangées et des files adjacentes et que lesdites cellules en vis-à-vis entre des groupes de rangées et de files adjacentes aient des fréquences différentes.

2. Système selon la revendication 1, dans lequel lesdites polarisations sont mutuellement orthogonales.

3. Système selon la revendication 1 ou 2, dans lequel le système de communication est un système de duplexage par répartition temporelle.

4. Système selon la revendication 3, dans lequel le système de communication est un système de duplexage par répartition temporelle adaptative.

5. Système selon l'une quelconque des revendications précédentes, dans lequel lesdites huit fréquences sont dans la gamme des fréquences millimétriques.

6. Système selon la revendication 5, dans lequel lesdites huit fréquences sont chacune dans la gamme de 10-60 GHz.

7. Système selon l'une des revendications précédentes, dans lequel lesdites seize cellules (610-680) sont disposées dans une grille carrée de quatre sur quatre telle que la distance entre les centres de deux cellules adjacentes quelconques soit deux fois supérieure à un rayon de cellule.

8. Système selon l'une des revendications 1 à 7, dans lequel lesdites seize cellules circulaires sont disposées dans une grille de quatre sur quatre répétitive formant un parallélogramme tel que le bord d'une cellule quelconque soit tangent au bord de six autres cellules et que les centres de chaque cellule soient colinéaires, des secteurs en vis-à-vis de cellules adjacentes de chaque groupe ayant une polarité différente, de telle sorte que :
lesdits premier et deuxième groupes de cellules soient disposés de façon que chaque cellule de chaque groupe soit adjacente et tangente à au moins une cellule de l'autre groupe de cellules ;
lesdits deuxième et troisième groupes de cellules sont disposés de façon que chaque cellule de chaque groupe soit adjacente et tangente à au moins une cellule de l'autre groupe, aucune cellule adjacente à une cellule du troisième groupe n'étant également adjacente à une cellule du premier groupe avec une combinaison de fréquences correspondant à celle de ladite cellule du troisième groupe ; et
lesdits troisième et quatrième groupes de cellules sont disposés de façon que chaque cellule de chaque groupe soit adjacente et tangente à au moins une cellule de l'autre groupe, aucune cellule adjacente à une cellule du quatrième groupe n'étant également adjacente à une cellule du deuxième groupe avec une combinaison de fréquences correspondant à celle de ladite cellule du quatrième groupe.

9. Procédé de réduction du brouillage de même canal dans une configuration répétitive orthogonale de cellules d'une configuration multi-cellulaire de cellules formant une grille rectiligne (710) dans un système de communication dans lequel chaque cellule comporte un concentrateur (105) à quatre antennes (202A-202D), chaque antenne desservant l'un, distinct, de quatre secteurs de quatre-vingt-dix degrés ne se chevauchant pas et étant capable de communiquer dans l'un de deux modes de polarisation pour chaque fréquence de communication utilisée par le système de communication, de telle sorte que, pour chaque concentrateur (105), un ensemble de secteurs de quatre-vingt-dix degrés opposés communique sur l'une desdites fréquences de communication avec l'une desdites polarisations et que l'autre ensemble de secteurs de quatre-vingt-dix degrés opposés communique sur l'une, différente, desdites fréquences de communication avec l'autre desdites polarisations, le procédé étant **caractérisé par** les étapes consistant à :
(a) utiliser huit types de cellules, chaque type de cellule comprenant une combinaison unique desdits deux ensembles de fréquence et de polarisation ;
(b) utiliser deux sous-groupements (701, 702) de cellules, chacun constitué de quatre cellules disposées dans une grille de deux sur deux, un premier sous-groupement comprenant quatre cellules ayant chacune un type de cellule différent desdits huit types de cellules, et un deuxième sous-groupement comprenant quatre cellules ayant chacune un type de cellule différent des quatre types de cellules restants ;
(c) faire alterner lesdits deux sous-groupements (701, 702) de façon orthogonale à l'intérieur de la configuration multi-cellulaire de cellules ; et
(d) orienter chaque paire de cellules diagonales alternées à l'intérieur de la configuration multi-cellulaire de cellules de quatre-vingt-dix degrés les unes par rapport aux autres.

10. Procédé selon la revendication 9, dans lequel le brouillage entre canaux adjacents est réduit.

11. Procédé selon la revendication 9 ou 10, dans lequel lesdites polarisations sont mutuellement orthogonales.

12. Procédé selon la revendication 9, 10 ou 11, dans lequel le nombre de fréquences est de huit.

13. Procédé selon la revendication 9, 10 ou 11, dans lequel le nombre de fréquences est d'au moins huit.

14. Procédé selon la revendication 13, dans lequel chaque type de cellule est répété une fois à l'intérieur de la configuration.

15. Procédé selon l'une des revendications 11 à 14, dans lequel le système de communication est un système de duplexage par répartition temporelle.

16. Procédé selon la revendication 15, dans lequel le système de communication est un système de duplexage par répartition temporelle adaptative.

17. Procédé selon la revendication 12 ou 13, dans lequel lesdites huit fréquences sont dans la gamme des fréquences millimétriques.

18. Procédé selon la revendication 17, dans lequel lesdites huit fréquences sont chacune dans la gamme de 10-60 GHz.
